# EUROPEAN PATENT APPLICATION

(11) **EP 0 967 133 A2**
(43) Date of publication of application: **29.12.1999**
(21) Application number: 99112371.2
(22) Date of filing: 28.06.1999
(51) Int. Cl.: B62D 5/04

(54) **Electronic control unit mounting arrangement for electric power steering system**

(30) Priority: 26.06.1998 US 105496
(71) Applicant: TRW INC., Lyndhurst Ohio 44124 (US)
(72) Inventor: Jones, Neil, Grosse Pointe Farms, Michigan 48236 (US)
(74) Representative: Wagner, Karl H., Dipl.-Ing.

(57) **Abstract**

A vehicle steering apparatus (10) comprises a first member (80) movable to effect turning of the steerable wheels (84), and an electric motor (100) for providing a drive force to move the first member. The electric motor (100) is mounted in the engine compartment (46) of the vehicle. A drive reduction unit (60) is interposed between the electric motor (100) and the first member (80). The drive reduction unit (60) is mounted in the engine compartment (46) of the vehicle. A manually rotatable second member (20) to which steering torque is applied is located in the occupant compartment (44) of the vehicle. A torque sensor (40) for sensing applied steering torque and providing an output signal indicative of applied steering torque is also mounted in the occupant compartment (44) of the vehicle. The apparatus (10) includes an electronic control unit (110) for receiving the output signal and for controlling the electric motor (100) in accordance with the output signal. The electronic control unit (110) is mounted in the occupant compartment (44) of the vehicle.

## Description

### Background Of The Invention

The present invention relates to a vehicle steering apparatus, and particularly relates to a vehicle steering apparatus which includes an electric motor for turning steerable vehicle wheels.

A typical vehicle steering apparatus which includes an electric motor also includes a steering torque sensor and an electronic control unit which receives signals from the torque sensor, and possibly from other sensors, and which controls the electric motor. When the electric motor is operated, the electric motor turns steerable vehicle wheels.

The electric motor has an output shaft which rotates about its own axis. The output shaft of the motor is connected with a gear box, which provides a gear reduction between the output shaft of the motor and a rotational steering member, such as a pinion gear which meshes with a linearly movable rack. Rotation of the pinion gear causes the rack to move linearly to turn steerable vehicle wheels.

The electric motor and the gear reduction gear box are in a housing, or in respective separate housings, and are relatively heavy, both having a relatively high mass. The torque sensor is also in a housing. The electronic control unit is commonly mounted to the motor.

In one known vehicle steering apparatus, the torque sensor, gear box and electric motor are mounted on the steering column in the occupant compartment of the vehicle. In this type of column-mounted steering system, the electronic control unit is typically integrated into the structure mounted on the steering column. Such apparatus has the parts of relatively high mass close to the legs of the vehicle driver.

Another known vehicle steering apparatus locates the electric motor, gear box, and torque sensor under the vehicle hood. In this type of "under the hood" steering system, the electronic control unit is integrated into the structure mounted under the hood. Location of the various parts including the electronic control under the hood exposes the parts to temperature changes due to engine operation and to the engine environment.

### Summary of the Invention

The present invention is a vehicle steering apparatus for turning steerable wheels of a vehicle having an occupant compartment and having an engine compartment under the vehicle hood separated from the occupant compartment by a firewall. The steering apparatus comprises a first member, such as a rack, movable to effect turning of the steerable wheels, and an electric motor for providing a drive force to move the first member. The electric motor is mounted in the engine compartment of the vehicle. A drive reduction unit is interposed between the electric motor and the first member. The drive reduction unit transmits a drive force from the motor to the first member. The drive reduction unit is mounted in the engine compartment of the vehicle. A manually rotatable second member to which steering torque is applied by the vehicle driver is located in the occupant compartment of the vehicle. A torque sensor for sensing applied steering torque and providing an output signal indicative of applied steering torque is also mounted in the occupant compartment of the vehicle. The apparatus includes an electronic control unit for receiving the output signal and for controlling the electric motor in accordance with the output signal. The electronic control unit is mounted in the occupant compartment of the vehicle.

### Brief Description Of The Drawings

The foregoing and other features of the present invention will become apparent to one skilled in the art to which the present invention relates upon consideration of the following description of the invention with reference to the accompanying drawings, wherein:
Fig. 1 is a pictorial view of a vehicle steering apparatus in accordance with a first embodiment of the present invention;
Fig. 2 is an enlarged view of a portion of the steering apparatus of Fig. 1;
Fig. 3 is an enlarged view of a motor and drive reduction gearbox which form part of the steering apparatus of Fig. 1;
Fig. 4 is another enlarged view of the motor and drive reduction gearbox which form part of the steering apparatus of Fig. 1;
Fig. 5 is a pictorial view of a vehicle steering apparatus in accordance with a second embodiment of the present invention; and
Fig. 6 is an enlarged view of a motor and drive reduction gearbox which form part of the steering apparatus of Fig. 5.

### Description of Preferred Embodiments

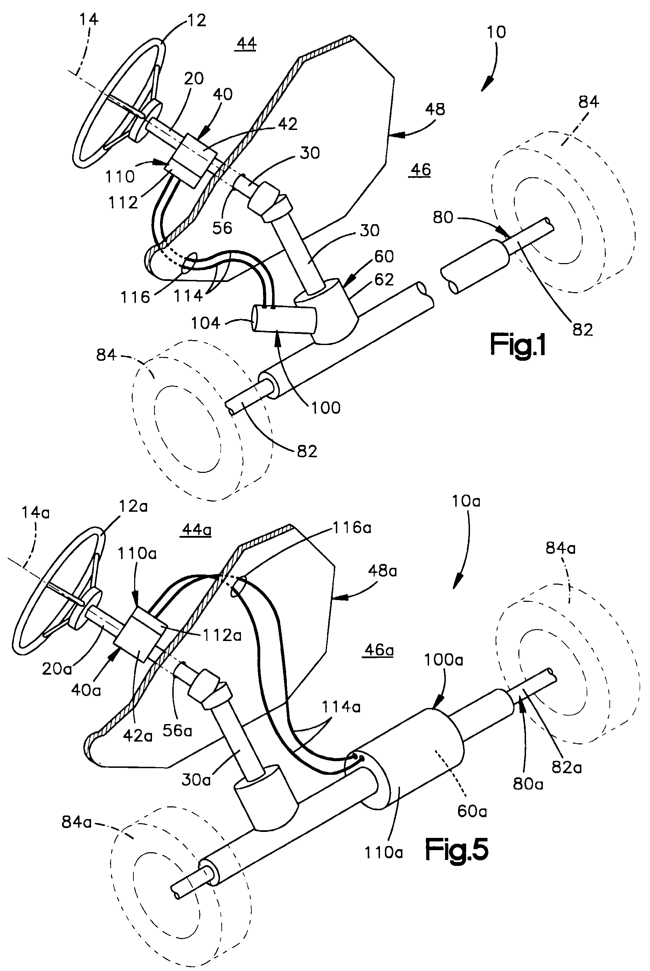

The present invention relates to a vehicle steering apparatus, and particularly relates to a vehicle steering apparatus which includes an electric motor for turning steerable wheels of a vehicle. As representative of the present invention, Fig. 1 illustrates a steering system 10 for a vehicle, such as an automobile.

The steering system 10 includes a steering wheel 12 of the vehicle. The steering wheel 12 is supported for rotation about a steering axis 14. An input shaft 20 is connected to the vehicle steering wheel 12 for rotation with the vehicle steering wheel 12.

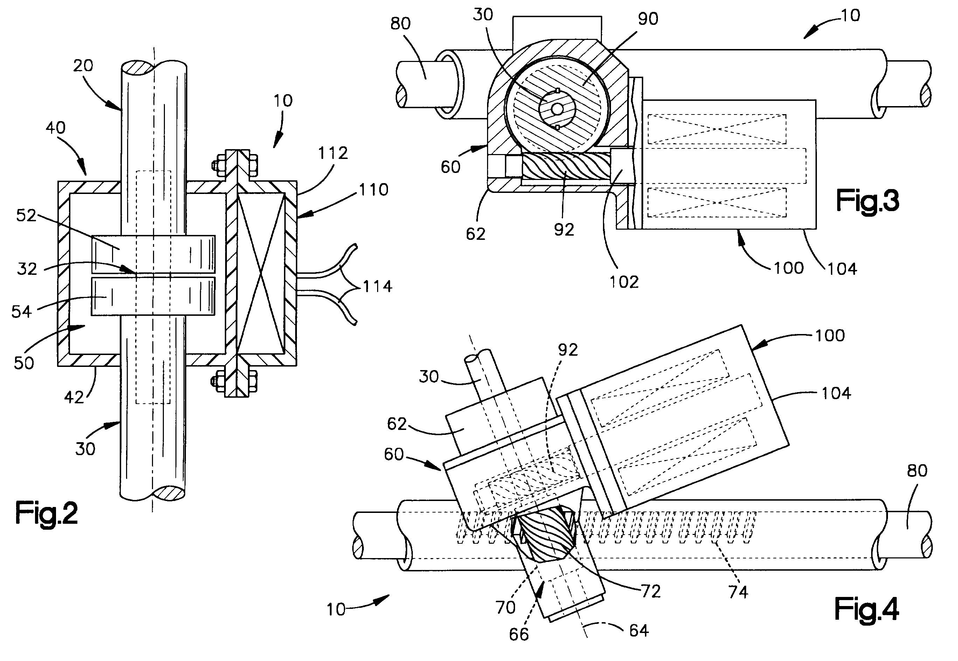

The input shaft 20 is operatively connected with a jointed output shaft 30, in a known manner, by a torsion bar 32 (Fig. 2). The torsion bar 32 twists in response to steering torque applied to the steering wheel 12. When the torsion bar 32 twists, relative rotation occurs between the input shaft 20 and the output shaft 30. Stops, not shown, limit the amount of such relative rotation between the input shaft 20 and the output shaft 30 in a manner known in the art.

The torsion bar 32 forms a part of a torque sensor 40. The torque sensor 40 includes a torque sensor housing 42. The torque sensor 40 and torque sensor housing 42 are located in the occupant compartment 44 (Fig. 1) of the vehicle. The occupant compartment 44 is separated from the engine compartment 46 of the vehicle by the vehicle firewall 48.

The torque sensor 40 also includes a position sensor 50 operatively coupled across the input shaft 20 and the output shaft 30. The position sensor 50 preferably includes a pair of relatively rotatable members 52 and 54, connected to the input shaft 20 and the output shaft 30, respectively. The members 52,54 have coils (not shown) which respond to relative rotation of the members 52, 54 and output a signal indicative of the direction and magnitude of the applied steering torque. The torque sensor 40 could be of other constructions.

The output shaft 30 extends from the torque sensor 40 through an opening 56 in the firewall 48 of the vehicle and into the engine compartment 46 of the vehicle. The output shaft 30 extends into a drive reduction unit 60. The drive reduction unit 60 includes a housing 62 and is located in the engine compartment 46 of the vehicle. The output shaft 30 is supported in the drive reduction unit housing 62 for rotation about an axis 64.

An end portion 66 of the output shaft 30 is formed as a pinion gear or pinion 70. (The output shaft 30 may, alternatively, comprise a plurality of shaft parts fixed for rotation with each other.) The pinion gear 70 has external gear teeth 72. The gear teeth 72 on the pinion 70 are in meshing engagement with a series of rack teeth 74 on a rack 80.

The rack 80 has end portions 82 coupled to steerable wheels 84 of the vehicle in a suitable manner. Linear movement of the rack 80 results in steering movement of the steerable wheels 84 of the vehicle.

Within the drive reduction unit housing 62, a worm wheel 90 is keyed to the output shaft 30 for rotation with the output shaft. The worm wheel 90 is in meshing engagement with a worm gear 92. The worm wheel 90 and the worm gear 92 together form a gear reduction unit or gearbox as part of the drive reduction unit 60. The drive reduction unit 60 including its housing 62 is located in the engine compartment 46 of the vehicle.

The worm gear 92 is driven for rotation by an electric assist motor 100. The motor 100 is of a known type for use in an electric assist steering system. The motor 100 has an output shaft 102 which is coaxial with and fixed for rotation with the worm gear 92. The output shaft 102 is supported for rotation in a housing 104 of the motor 100. The motor housing 104 has a generally cylindrical configuration and, like the housing 62 of the drive reduction unit 60, is located in the engine compartment 46 of the vehicle. The engine compartment 46 is covered by a hood (not shown) of the vehicle.

The location of the motor 100 and the drive reduction unit 60 in the vehicle engine compartment 46 is advantageous because these parts are thereby close to the point at which power assist is applied by the pinion 70 to the rack 80. This location is advantageous also because these parts are relatively massive and heavy. Having a relatively massive and heavy object, such as the motor 100 or the drive reduction unit 60, in the vehicle occupant compartment 44, is potentially injurious to the legs of the vehicle driver in the event of a vehicle collision.

Operation of the motor 100 is controlled by an electronic control unit, or "ECU", 110. The ECU 110 includes an ECU housing 112. The ECU housing 112 is attached to the torque sensor housing 42. The ECU housing 112 and the ECU 110 are thus located in the vehicle occupant compartment 44. The ECU housing 112 may, alternatively, be part of the torque sensor housing 42.

The location of the torque sensor 40 and the ECU 110 in the occupant compartment 44 of the vehicle is advantageous because these parts include electronic components which can be adversely affected by the high temperatures and other environmental conditions commonly found in the vehicle engine compartment 46. Having the torque sensor and the ECU 110 in the vehicle occupant compartment 44 shields these items from the conditions in the vehicle engine compartment 46.

The ECU 110 is electrically connected with the motor 100 by a wiring harness indicated schematically at 114. The wiring harness 114 extends through an opening 116 in the vehicle firewall 48. The wiring harness 114 can, if desired, extend through the same opening 56 in the vehicle firewall 48 through which the output shaft 30 extends.

When steering torque is applied to the vehicle steering wheel 12, the input shaft 20 rotates about the axis 14. The direction and magnitude of the applied steering torque are sensed by the torque sensor 40. The torque sensor 40 outputs a torque signal to the ECU 110. The motor 100 is energized by a control signal transmitted to the motor by the wiring harness 114, and the output shaft 102 of the motor 100 rotates.

The rotating motor output shaft 102 applies a drive force to the worm gear 92. The worm gear 92 effects rotation of the worm wheel 90 and the pinion 70 about the axis 64 at a reduced speed compared to the speed of the motor 100. The drive reduction unit 60 thus transmits the drive force of the motor 100 to the rack 80.

The rotation of the pinion 70 results in linear movement of the rack 80. The rack 80 moves in a direction consistent with the applied steering torque and, thereby, moves the steerable wheels 84 of the vehicle. The motor 100 thus provides steering assist in response to the applied steering torque.

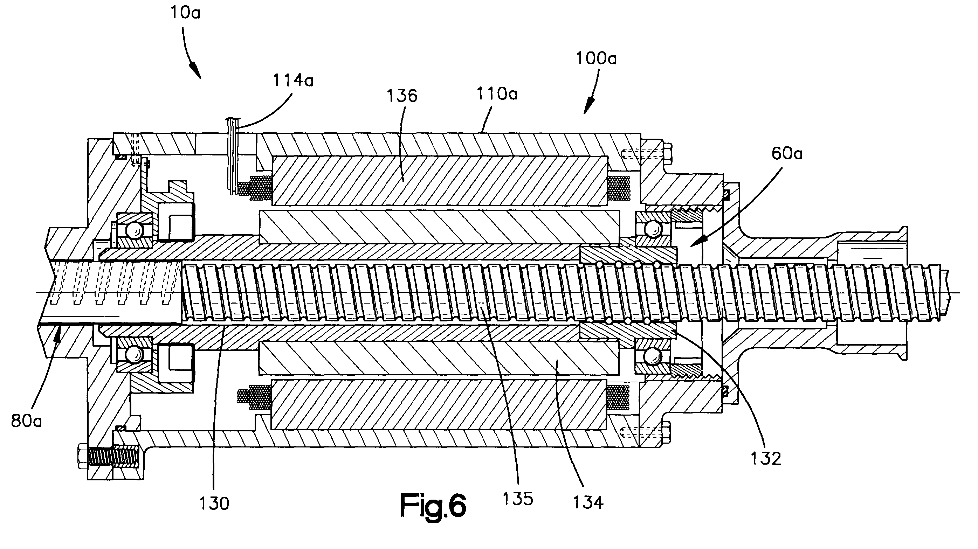

Figs. 5 and 6 illustrate a steering system 10a in accordance with a second embodiment of the present invention. The steering system 10a is similar in construction to the steering system 10 (Figs. 1-4) and similar parts are given the same reference numerals with the suffix "a" added for clarity.

In the steering system 10a (Fig. 5), the electric assist motor 100a and the drive reduction unit 60a are of a different construction than the corresponding parts of the steering system 10. The assist motor 100a has a longitudinal central opening 130 through which the rack 80a extends. The rack 80a also extends through the drive reduction unit 60a, which includes a ball nut 132 fixed for rotation with a rotor 134 of the motor 100a. The ball nut 134 is drivingly engaged with a screw portion 135 of the rack 80a. The rotor 134 is driven for rotation by an electrically energizable stator 136 of the motor 100a. The motor 100a is generally of the type shown in U.S. Patent 4,773,497.

In the steering system 10a, the drive reduction unit 60a and the motor 100a are located in the engine compartment 46a of the vehicle. The torque sensor 40a and the ECU 110a are located in the occupant compartment 46a of the vehicle. The ECU 110a is electrically connected with the motor 100a by a wiring harness 114a which extends through an opening 116a in the vehicle firewall 48a.

When steering torque is applied to the vehicle steering wheel 12a, the input shaft 20a rotates about the axis 14a. The torque sensor 40a outputs a torque signal to the ECU 110a. The motor 100a is energized by a control signal along the wiring harness 114a, and the rotor 134 of the motor 100a rotates.

The rotor 134 applies a drive force to the ball nut 132. The ball nut 132 rotates and directly effects linear movement of the rack 80a. The rack 80a moves in a direction consistent with the applied steering torque and, thereby, moves the steerable wheels 84a of the vehicle. The motor 100a thus provides steering assist in response to the applied steering torque.

From the above description of the invention, those skilled in the art will perceive improvements, changes and modifications in the invention. Such improvements, changes and modifications are intended to be covered by the appended claims.

According to its broadest aspect the invention relates to a vehicle steering apparatus for turning steerable wheels of a vehicle having an occupant compartment and having an engine compartment separated from the occupant compartment by a firewall, said apparatus comprising: a first member movable to effect turning of the settable wheels, an electric motor for providing a drive force to move said first member, said electric motor being mounted in the engine compartment of the vehicle and a drive reduction unit interposed between said electric motor and said first member.

## Claims

1. A vehicle steering apparatus for turning steerable wheels of a vehicle having an occupant compartment and having an engine compartment separated from the occupant compartment by a firewall, said apparatus comprising:
a first member movable to effect turning of the steerable wheels,
an electric motor for providing a drive force to move said first member, said electric motor being mounted in the engine compartment of the vehicle,
a drive reduction unit interposed between said electric motor and said first member, said drive reduction unit transmitting a drive force from said motor to said first member, said drive reduction unit being mounted in the engine compartment of the vehicle;
a manually rotatable second member to which steering torque is applied, said manually rotatable second member being located in the occupant compartment of the vehicle;
a torque sensor for sensing applied steering torque and providing an output signal indicative of applied steering torque, said torque sensor being mounted in the occupant compartment of the vehicle; and
an electronic control unit for receiving said output signal and for controlling said electric motor in accordance with said output signal, said electronic control unit being mounted in the occupant compartment of the vehicle.

2. A vehicle steering apparatus as defined in claim 1 further including a wiring harness extending from said electronic control unit to said electric motor.

3. A vehicle steering apparatus as defined in claim 2 wherein said wiring harness extends through an opening in the firewall of the vehicle.

4. A vehicle steering apparatus as defined in claim 1 wherein said torque sensor includes a first housing and said electronic control unit includes a second housing mounted on said first housing.

5. A vehicle steering apparatus as defined in claim 1 wherein said first member comprises a rack, said steering apparatus further including a pinion in meshing engagement with said rack.

6. A vehicle steering apparatus as defined in claim 5 wherein said drive reduction unit drives said pinion which in turn moves said rack.

7. A vehicle steering apparatus as defined in claim 6 wherein said drive reduction unit comprises a first gear rotatable by said electric motor and a second gear in meshing engagement with said first gear, said second gear being rotatable with said pinion.

8. A vehicle steering apparatus as defined in claim 5 wherein said drive reduction unit linearly moves said rack.

9. A vehicle steering apparatus as defined in any of the preceding claims wherein said drive reduction unit comprises a ball nut fixed for rotation with a rotor of said electric motor, said ball nut being in driving engagement with a screw portion of said rack,
and/or wherein preferably said electronic control unit is juxtaposed to said torque sensor.

10. A vehicle steering apparatus for turning steerable wheels of a vehicle having an occupant compartment and having an engine compartment separated from the occupant compartment by a firewall, said apparatus comprising:
a first member movable to effect turning of the steerable wheels,
an electric motor for providing a drive force to move said first member, said electric motor being mounted in the engine compartment of the vehicle, and
a drive reduction unit interposed between said electric motor and said first member.
